# EUROPÄISCHE PATENTSCHRIFT

(11) **EP 1 796 951 B1**
(45) Veröffentlichungstag und Bekanntmachung des Hinweises auf die Patenterteilung: **06.05.2009**
(21) Anmeldenummer: 05760768.1
(22) Anmeldetag: 29.06.2005
(51) Int. Cl.: B62D 25/14, B62D 29/00

(54) **BAUTEIL, INSBESONDERE QUERTRÄGER FÜR EIN FAHRZEUG**
STUCTURAL ELEMENT, IN PARTICULAR A CROSS BEAM, FOR A VEHICULE
ELEMENT DE STRUCTURE, NOTAMMENT TRAVERSE, POUR UN VEHICULE

(30) Priorität: 07.07.2004 DE 102004032951
(43) Veröffentlichungstag der Anmeldung: 20.06.2007
(73) Patentinhaber: Behr GmbH & Co. KG, 70469 Stuttgart (DE)
(72) Erfinder: WOLF, Walter, 71570 Oppenweiler-Zell (DE)
(86) Internationale Anmeldenummer: PCT/EP2005/007013
(87) Internationale Veröffentlichungsnummer: WO 2006/002900

(56) Entgegenhaltungen:
- EP-A- 1 149 717
- DE-A1- 10 064 522
- DE-U1- 29 916 470
- US-A- 5 934 733

## Beschreibung

Die Erfindung bezieht sich auf ein Bauteil, insbesondere auf einen Querträger zum Anordnen zwischen A-Säulen eines Kraftfahrzeuges sowie auf die Verwendung eines derartigen Bauteils. Des Weiteren betrifft die Erfindung ein Verfahren zur Herstellung eines derartigen Bauteils.

Aus dem Kraftfahrzeugbau sind aus Rohren bestehende Querträger bekannt, die aus Metall bestehen und entsprechend große Wandstärken aufweisen. Die Wandstärken sind dabei für eine ausreichende Form-, Biege-, Knick- und Torsionssteifigkeit und somit für eine ausreichende Druckbelastbarkeit entsprechend dick ausgeführt. Der als Rohr oder Hohlprofil ausgebildete Querträger eignet sich prinzipiell zur Luftführung beispielsweise von einer mittig im Frontbereich des Fahrzeugs angeordneten Klimaanlage zu seitlichen Ausströmern hin.

Ein derartiger Querträger ist beispielsweise aus der DE 100 64 522 A1 bekannt. Dabei ist der Querträger zur Gewichtsreduzierung aus einem Leichtbauwerkstoff, insbesondere aus einem Leichtmetall in Art eines Schalenbauteils oder Grundkörpers gebildet, in welchen für eine hinreichende Steifigkeit und Druckbelastbarkeit des Querträgers ein zumindest einen Führungskanal, insbesondere Luftführungskanal bildender Kunststoffkern angeordnet ist. Zum Austritt des Luftstroms ist der Kanal mit Öffnungen versehen.

Zudem ist es bekannt, an einen solchen Grundkörper Anbauteile, beispielsweise Schraubdome, Filmscharniere, Kabelhalter, Kabelführungen, Kabelkanäle, Halter oder Aufnahmen für Bauteile aller Art, Lagerzapfen, Montageclipse und fertig montierte Unterbaugruppen anzubringen. So ist aus der DE 44 09 081 C1 eine bewegliche, in eine Fahrzeugkarosserie einmontierbare Baueinheit für den Stirnwand- und Cockpitbereich eines Personenkraftwagens bekannt, die in ihrer tragenden Substanz aus zwei Verbundteilen gebildet ist, die jeweils aus tief gezogenem Blech und daran angespritztem Kunststoff bestehen. Dabei bildet das eine Verbundteil die Stirnwand als vordere Abschlusswand des Insassenraumes und das andere Verbundteil den Instrumententafelträger, wobei der Blechanteil eines jeden Verbundteiles derart geformt ist, dass mit ihm dem großräumigen Kraftfluss bei der Aufnahme der Betriebsbelastung innerhalb des Verbundteiles und an den Anschlussstellen zur Karosserie hin Rechnung getragen ist und durch örtlich gezielte Anbringung von Bohrungen, Durchbrüchen und/oder ausgestellten Zungen Verankerungsstellen für den angespritzten Kunststoff zum formschlüssigen Verankern des Kunststoffes an dem Blechteil geschaffen sind und wobei der angespritzte Kunststoff derart geformt ist, dass mit ihm zum einen eine die Blechteile versteifende Verrippung und zum anderen formangepasste Aufnahmen für die diversen Anbauteile gebildet werden. Dabei können Funktionselemente wie Kanäle und Kabelhalter aus dem Kunststoff gebildet sein.

Die DE 101 25 559 A1 beschreibt ein Verfahren zur Herstellung eines Verbundteils aus einem Metallbauteil und einer Kunststoffstruktur, bei dem das Metallbauteil, das über mindestens eine Fläche mit mindestens einem Stanzrand verfügt, und die Kunststoffstruktur in Fügewerkzeuge eingelegt und die Fügewerkzeuge zusammengefahren werden, wobei der Stanzrand form- und kraftschlüssig in die Kunststoffstruktur eingepresst wird. Beim Fügen von Halbschalen oder Anbauteilen an den Grundkörper, z. B. beim thermischen Fügen (= Schweißen) muss dabei ein genügend großer Abstand zu dem innen liegenden Kunststoff (= Kunststoffkern) oder dem außen liegenden Kunststoff (= Anbindung) eingehalten werden, damit dieser nicht geschädigt wird. Dabei erfordern Kunststoffauskleidungen, wie der Kunststoffkern große aufwendige Werkzeuge mit hohen Kosten und wenig Möglichkeiten zu Formänderungen der Kunststoffauskleidungen oder -integrationen. Insbesondere so genannte Spritzgusswerkzeuge für derartige Hybrid-Bauteile (= Metall-Kunststoff-Bauteil) sind teuer und aufwendig. Zudem benötigt die Fügetechnik große Schweißflansche und somit einen großen Bauraum und schränken ebenfalls die Gestaltungsform, insbesondere bei der Verwendung in einem Fahrzeug mit geringem Bauraumplatz ein.

Der Erfindung liegt daher die Aufgabe zugrunde, das aus dem aus der DE 100 64 522 bekannten Stand der Technik bekannte Bauteil, insbesondere einen Querträger hinsichtlich einer besonders leichten Ausführungsform sowie einer einfachen und schnellen Herstellung zu verbessern.

Die Aufgabe wird erfindungsgemäß gelöst durch ein Bauteil mit den Merkmalen des Anspruchs 1 und Verwendungen eines Bauteils mit den Merkmalen der Ansprüche 19 und 20 sowie durch ein Verfahren zur Herstellung eines Bauteils mit den Merkmalen des Anspruchs 21.

Vorteilhafte Weiterbildungen der Erfindung sind Gegenstand der Unteransprüche.

Für eine möglichst große Gewichtseinsparung im Fahrzeugbau ist ein Bauteil, insbesondere ein Querträger zum Anordnen zwischen A-Säulen eines Kraftfahrzeugs, vorgesehen, der einen im wesentlichen als Hohlprofil ausgebildeten Grundkörper aufweist, der innen mit einem Führungskanal versehen ist und mindestens eine Anbindung aufweist, an welche ein Anbauteil nachträglich in einem Verfahrensschritt oder Arbeitsgang integrierbar, insbesondere anfügbar ist. Hierdurch ist sichergestellt, dass das Anbauteil oder Funktionselement in einem separaten Werkzeug vorgefertigt werden kann, wodurch das Funktionselement beliebige Gestalt und Form aufweisen kann sowie in beliebiger Form, z. B. Spritzguss, Strangpressen, Rotationsformen, Blasformen, hergestellt werden kann. Das Anbauteil wird anschließend auf das bereits fertig gefügte Bauteil, z. B. einem Querträger, oder auf ein zumindest teilweise vorgefertigtes Bauteil, z. B. einem Segment, mit seiner Anbindung angefügt.

Für eine möglichst belastbare Verbindung des Grundkörpers mit dem Anbauteil ist die Anbindung vorzugsweise form- und kraftschlüssig, insbesondere verdrehsicher ausgebildet. Zweckmäßigerweise ist die Anbindung als eine Kunststoff-Metall-Verbindung ausgebildet. Hierzu ist die Anbindung durch mindestens einen in der Oberfläche des Grundkörpers eingefügten Kragen, z. B. einen Stanzkragen, gebildet. Vorzugsweise weist der Kragen einen Hinterschnitt auf. Dies ermöglicht eine besonders kraftschlüssige Verbindung. Je nach Art, Größe und Form des anzufügenden Anbauteils umfasst der Grundkörper vorzugsweise mehrere Kragen. Hierdurch ist das Anbauteil über die Anbindung mit dem Grundkörper besonders kraft- und zugfest verbunden.

In einer weiteren Ausführungsform ist die Anbindung durch eine Außenwölbung, insbesondere einen nach außen ragenden Wulst oder eine nach außen ragende Sicke in der Oberfläche des Grundkörpers gebildet. Je nach Art, Größe und Form des Anbauteils sowie Anforderungen an die mechanischen Belastungen der Anbindung kann der Grundkörper mit mehreren verschiedenartigen Anbindungen versehen sein. Mit anderen Worten: Die Oberfläche des Grundkörpers kann eine beliebige Kombination von kragenförmigen, wulstförmigen und/oder sickenförmigen Anbindungen aufweisen.

In einer einfachen Ausführungsform ist das Anbauteil aus einem Spritzgußmaterial, insbesondere Kunststoff gebildet Der Grundkörper ist vorzugsweise aus Metall, insbesondere Stahl, Titan, Aluminium, Magnesium gebildet Insbesondere ist der Grundkörper als ein metallisches Hohlprofil oder ein Hohlkörper ausgeführt. Dabei ist der im Grundkörper vorgesehene Führungskanal aus einem Spritzgußmaterial, insbesondere Kunststoff gebildet. Darüber hinaus ist der Führungskanal zweckmäßigerweise akustisch und/oder thermisch isolierend ausgebildet. Dies ermöglicht eine Verwendung beispielsweise als Strömungskanal, insbesondere Luftführungskanal zur Klimatisierung eines Fahrzeuginnenraums.

Je nach Art und Ausführung des Anbauteils ist diese im Bereich der Anbindung aus einer Spritzgussschicht, insbesondere Kunststoff gebildet. Dabei kann das Anbauteil eine separate Kunststoffschicht aufweisen. Alternativ kann die Kunststoffschicht durch das als ein Kunststoffelement ausgebildetes Anbauteil selbst gebildet sein.

Je nach Vorgabe hinsichtlich der Festigkeit der Verbindung umfasst die Anbindung eine weitere Verbindungsstelle, die als eine Klemmverbindung, eine Rastverbindung, eine Clips-Verbindung, eine Schraubverbindung, eine Klebverbindung und/oder eine Bördelverbindung ausgebildet ist. Für eine möglichst einfache Herstellung, insbesondere in einem Arbeitsgang für das Anfügen des Anbauteils und Bilden der Verbindungsstelle ist die Verbindungsstelle selbst aus einem Spritzgußmaterial, insbesondere Kunststoff gebildet, welcher beim Anfügen zu der Verbindungsstelle geformt wird.

In einer möglichen Ausführungsform ist das Anbauteil an einen vorgefertigten Grundkörper, insbesondere in so genannter Outsert-Technik anbringbar. Bei der Outsert-Technik werden für ein rationelles Verarbeitungsverfahren, z. B. mit Hilfe von Spritzgussautomaten, gegebenenfalls die Anbindung selbst, das Anbauteil sowie gegebenenfalls die weitere Verbindungsstelle in einem Arbeitsgang auf den vorgefertigten Grundkörper, insbesondere dessen Anbindung aufgebracht. Dabei kommen die Eigenschaften von zwei unterschiedlichen Werkstoffen, nämlich Metall des Grundkörpers und Spritzgussschicht, des Anbauteils bzw. der Verbindungsstelle optimal zur Wirkung. Alternativ kann der Grundkörper mit seiner Anbindung und dem Anbauteil vorfertigbar sein, wobei ein ebenfalls vorgefertigter Führungskanal nachträglich in den Grundkörper fügbar ist. Beispielsweise findet dies Anwendung in einer Nachrüstung oder Umrüstung eines Bauteils, z. B. eines Querträgers, zu einem Bauteil mit einer integrierten Führung. In einer weiteren Ausführungsform ist der Grundkörper mit seiner Anbindung und mit einem integrierten, als Kunststoffkern ausgebildeten Führungskanal vorfertigbar, wobei das Anbauteil nachträglich an der Anbindung anbringbar ist. Hierbei wird sichergestellt, dass der bereits integrierte und innen liegende Führungskanal dicht bleibt, indem das Anbauteil von außen auf die an der Oberfläche des Grundkörpers angeordnete Anbindung angefügt wird. Hierdurch kann zu einem beliebigen Zeitpunkt, auch noch nach Fertigstellung des Grundkörpers ein beliebiges Anbauteil oder Funktionselement in beliebiger Gestalt oder Form an den Grundkörper angefügt werden.

Auch kann der Führungskanal im Grundkörper nur teilweise integriert, insbesondere gefügt sein. Beispielsweise wird nur ein Teil des Grundkörpers als Strömungskanal, Strömungsauslass und/oder Strömungseinlass verwendet. In einer weiteren Ausführungsform ist der Grundkörper aus zwei oder mehreren Segmenten, insbesondere Schalensegmenten gebildet. Dabei kann der Grundkörper aus Längssegmenten oder Quersegmenten zusammengesetzt sein.

Für eine vielfältige Verwendung des Bauteils kann das Anbauteil als ein Funktionselement ausgebildet sein und beispielsweise eine Instrumententafel-Aufnahme, ein Schraubdom, ein Filmscharnier, ein Kabelhalter, eine Kabelführung, ein Montageträger für Lenkung, Airbag und/oder ein Halteelement sein. Hierdurch ist das Bauteil beispielsweise als ein Instrumententafelträger in einem Kraftfahrzeug einsetzbar, wobei der Führungskanal ein Luftführungskanal und/oder ein Kabelkanal ist. Auch kann das Bauteil als ein unter einer Windschutzscheibe angeordneter Querträger in einem Kraftfahrzeug verwendet werden, wobei der Führungskanal ein Luftführungskanal zur Führung eines der Windschutzscheibe und/oder den Seitenscheiben zu zuführenden Luftstroms und/oder zur Beheizung einer Wischblattablage dient.

Des Weiteren betrifft die Erfindung ein Verfahren zur Herstellung eines Bauteils, wobei der Grundkörper zunächst in eine Grundform, insbesondere zu einem Hohlprofil oder Hohlkörper, umgeformt wird und in den Grundkörper ein Führungskanal sowie in die Oberfläche des Grundkörpers mindestens eine Anbindung gefügt wird, an welche nachträglich in einem einzigen Verfahrensschritt oder Arbeitsgang ein Anbauteil integriert, insbesondere angefügt, angeformt oder angespritzt wird. Dabei wird das Anbauteil an dem Grundkörper befestigt, indem mindestens ein Kunststoff in der geometrischen Form des Anbauteils an den Grundkörper im Bereich der Anbindung selbsthaftend angespritzt wird. Dies ermöglicht eine besonders formschlüssige Verbindung von Grundkörper und Anbauteil. Darüber hinaus wird ein vorgefertigtes Anbauteil an dem Grundkörper befestigt, indem es auf die Anbindung des Grundkörpers aufgepresst wird, wodurch eine besonders kraftschlüssige Verbindung hergestellt ist, indem die Anbindung beispielsweise durch das Aufpressen oder bereits vorgefertigt als ein Stanzrand geformt wird, an welchen eine Verjüngung ausgebildet ist, in welche das Anbauteil kraftschlüssig angefügt wird.

Je nach Art, Größe und Form des Anbauteils wird dieses auf mindestens zwei an dem Grundkörper geformte Anbindungen gepresst. Zusätzlich wird das Anbauteil an einer weiteren Verbindungsstelle befestigt werden, indem es an dieser weiteren Stelle stoff- oder formschlüssig mit dem Grundkörper verbunden wird. Für eine möglichst kraftschlüssige Verbindung wird dabei das Anbauteil an der weiteren Verbindungsstelle wenigstens teilweise in den Grundkörper eingeschoben.

Zweckmäßigerweise wird als Führungskanal ein akustisch und/oder thermisch isolierender Kunststoffkanal eingebracht. Alternativ kann der Führungskanal auch nachträglich im Herstellungsverfahren mit einer akustisch und/oder thermisch isolierenden Schicht versehen werden. Die Schicht ist bevorzugt den Führungskanal umlaufend für eine hinreichende Dämpfung ausgebildet. Zusätzlich kann der Führungskanal an wenigstens einer Öffnung mit einer Dichtungsvorrichtung für eine hinreichende Dichtheit gegenüber einem durch den Führungskanal strömenden Medium, z. B. Luft, versehen werden.

Je nach Komplexität des Bauteils kann der Grundkörper aus wenigstens zwei Schalen, insbesondere zwei Halbschalten, und/oder Segmenten zusammengesetzt werden. Auch kann der Grundkörper aus einem einzigen Hohlkörper, z. B. einem geschlossenen Metallprofil, einem Rohr, gebildet sein.

Für eine Verwendung des Bauteils als Multifunktionselement wird als Anbauteil ein Behälter, ein Kabelhalter und/oder ein anderes Befestigungselement an dem Querträger geformt und über die Anbindung angefügt.

Die mit der Erfindung erzielten Vorteile bestehen insbesondere darin, dass durch ein nachträgliches Fügen eines Anbauteils an eine Anbindung eines Grundkörpers ein Bauteil aus einem beliebigen Grundkörper mit beliebigen Anbindungen gefertigt werden kann. Insbesondere ist ein flanschloses Bauteil möglich, wodurch das Bauteil besonders wenig Bauraum benötigt. Zudem ist durch die Montage oder das Anfügen des Anbauteils auf die Außenseite oder Oberfläche des Grundkörpers in Abhängigkeit von der Bauteilstabilität die Verwendung eines aufwendigen Hybrid-Werkzeugs sicher vermieden. Auch ist das Herstellungsverfahren eines solchen Bauteils besonders Material sparend und somit weist das Bauteil ein besonders geringes Gewicht auf, wodurch das Bauteil insbesondere zur Verwendung in einem Fahrzeug geeignet ist. Bei einem nachträglichen Einbringen des Führungskanals in den Grundkörper kann zu dem ein beliebiges Fügeverfahren, z. B. Aufpressen, Anspritzen, Anformen, Schweißen, Clinchen, Klemmen, zum Anfügen des Anbauteils über die Anbindung an den Grundkörper verwendet werden. Auch ist ein solches Bauteil besonders geeignet für nachträgliche Änderungen, z. B. Anbringen weiterer Anbauteile oder Funktionselemente, z. B. eines zusätzlichen Kabelhalters.

Ausführungsbeispiele der Erfindung werden anhand einer Zeichnung näher erläutert. Darin zeigen: Fig. 1 Fig. 2 Fig. 3A, 3B Fig. 4A, 4B Fig. 5 schematisch im Querschnitt ein Bauteil mit einem Grundkörper, umfassend einen darin angeordneten Kanal sowie eine Anbindung für ein Anbauteil, schematisch eine alternative Ausführungsform für ein Bauteil im Querschnitt, schematisch eine Anbindung im Detail für ein Anbauteil im Querschnitt und in Draufsicht, schematisch mehrere Anbindungen für ein Anbauteil in Draufsicht, schematisch einen Teil eines Grundkörpers mit einer Anbindung für ein Anbauteil in perspektivischer Darstellung,

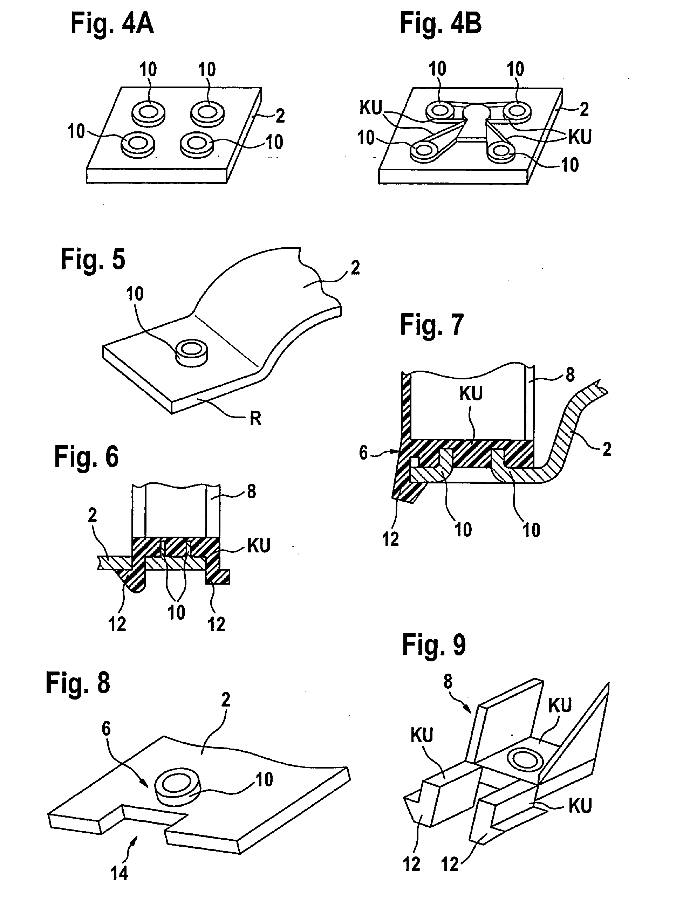

- Fig. 6, 7: schematisch im Querschnitt verschiedene Ausführungsformen für eine Anbindung mit einem daran angefügten Anbauteil,
- Fig. 8, 9: schematisch in perspektivischer Darstellung einen Grundkörper mit Anbindung und ein daran anzufügendes Anbauteil,

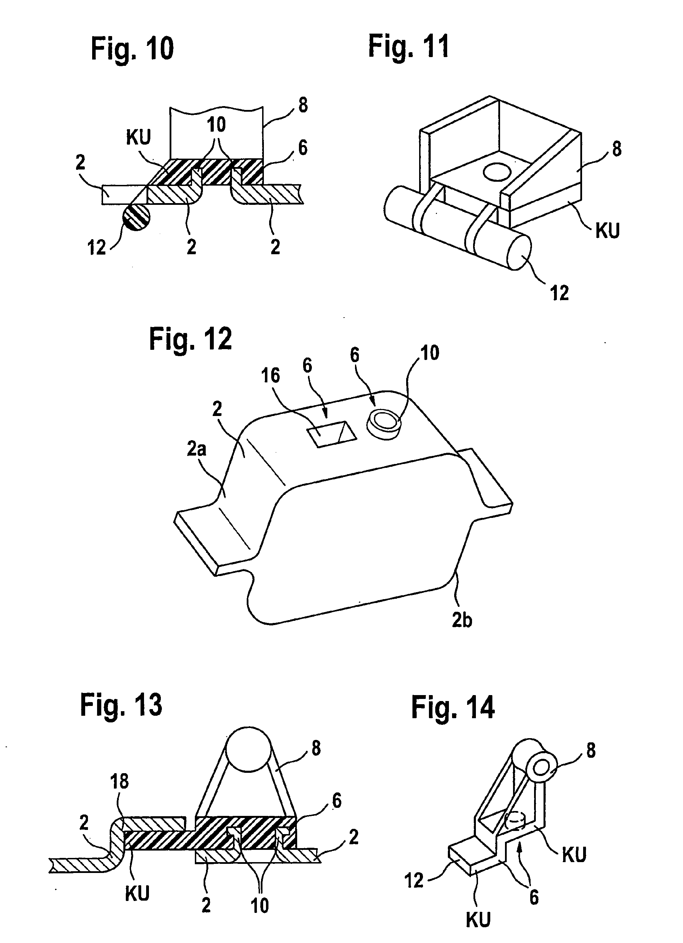

- Fig. 10, 11: schematisch verschiedene Ausführungsformen für ein an eine Anbindung des Grundkörpers anzufügendes Anbauteil im Querschnitt und in perspektivischer Darstellung,
- Fig. 12: schematisch verschiedene Ausführungsformen für eine Anbindung in perspektivischer Darstellung,
- Fig. 13: schematisch im Querschnitt eine mögliche Ausführungsform für einen Grundkörper mit Anbindung und einer weiteren Verbindungsstelle für ein Anbauteil,
- Fig. 14: schematisch in perspektivischer Darstellung ein Anbauteil für die Anbindung nach Fig. 13,

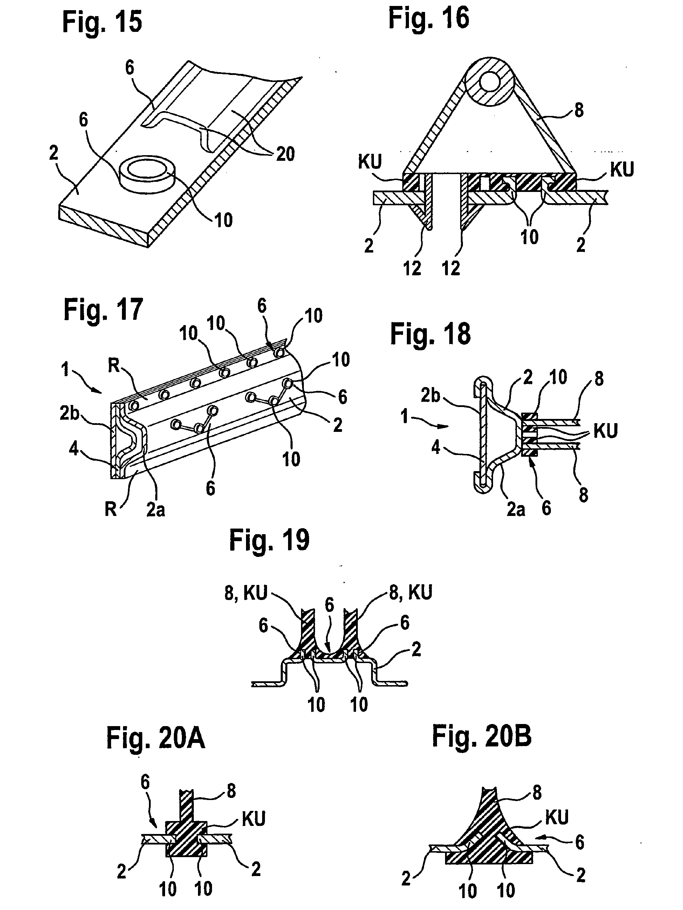

- Fig. 15: schematisch in perspektivischer Darstellung verschiedene Ausführungsformen für eine Anbindung eines Grundkörpers,
- Fig. 16: schematisch im Querschnitt eine mögliche Ausführungsform für einen Grundkörper mit Anbindung und einer weiteren Verbindungsstelle für ein Anbauteil,
- Fig. 17: schematisch ein Bauteil mit einem mehrere Anbindungen für mehrere Anbauteile aufweisenden Grundkörper,
- Fig. 18, 19: schematisch im Querschnitt ein Bauteil bzw. einen Grundkörper mit mehreren Anbindungen für ein Anbauteil,
- Fig. 20A, 20B: schematisch eine Anbindung im Detail für ein Anbauteil in Outsert-Technik.

Einander entsprechende Teile sind in allen Figuren mit den gleichen Bezugszeichen versehen.

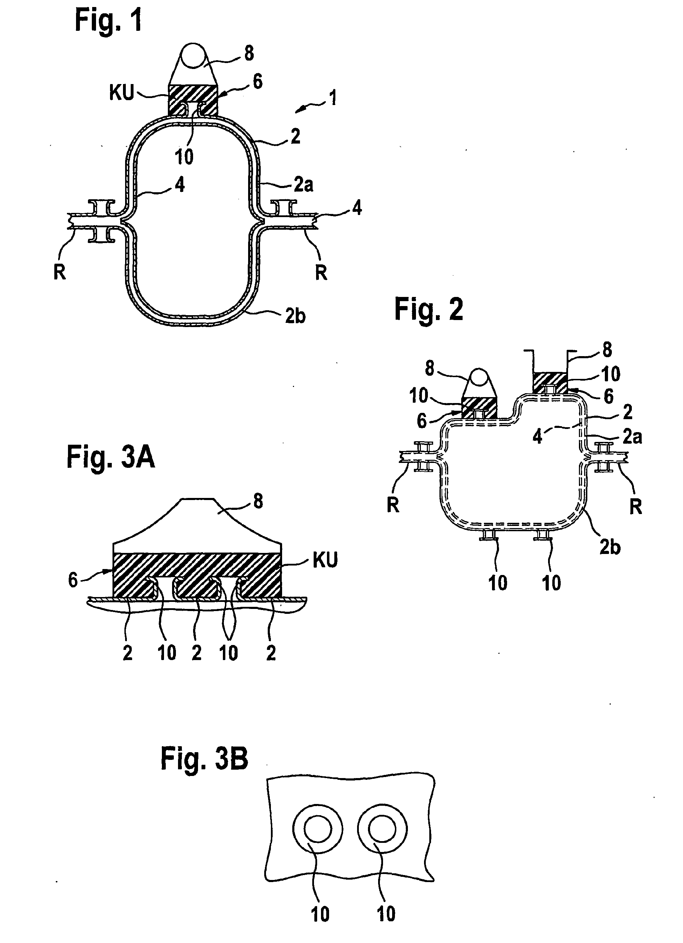

Figur 1 zeigt schematisch im Querschnitt ein Bauteil 1, z.B. einen Querträger, zum Anordnen zwischen nicht näher dargestellten A-Säulen eines nicht näher dargestellten Fahrzeugs. Das Bauteil 1 dient beispielsweise als Instrumententafelträger für eine Klima- und/oder Heizungsanlage. Alternativ kann das Bauteil 1 als ein unter einer Windschutzscheibe angeordneter Querträger in einem Fahrzeug dienen, welcher als Luftführungskanal zur Klimatisierung des Fahrzeuginnenraums und zur Enteisung der Windschutz- oder Frontscheibe vorgesehen ist.

Das Bauteil 1 weist einen Grundkörper 2 auf, der bevorzugt aus Blech, insbesondere aus einem Leichtmetall-Blech, z.B. aus Aluminium-Blech oder Feinstahl-Blech, gebildet ist. Der Grundkörper 2 ist im Ausführungsbeispiel als Hohlprofil, insbesondere rohrartig ausgeführt. Alternativ kann der Grundkörper 2 auch als ein Hohlprofil mit einem vieleckigen Querschnitt ausgeführt sein (nicht näher dargestellt). Des Weiteren ist der Grundkörper 2 aus zwei Halbkörpern 2a und 2b, z.B. zwei Halbschalen, gebildet - einer Unterschale und einer Oberschale. Je nach Art und Ausführung kann der Grundkörper 2 aus weiteren Segmenten oder Schalen bestehen. Dabei kann der Grundkörper 2 aus Längs- und/oder Quersegmenten zusammengesetzt sein.

Der Grundkörper 2 ist innenseitig mit einem Führungskanal 4 versehen, der beispielsweise einen Kabelkanal oder Strömungskanal, insbesondere einen Luftführungskanal bildet. Mit anderen Worten: Der Führungskanal 4 dient beispielsweise der Führung eines Mediums, insbesondere Luft zur Klimatisierung des Fahrzeuginnenraums. Alternativ kann der Führungskanal 4 auch der Führung von Leitungen oder Kabeln dienen.

Der Führungskanal 4 ist bevorzugt aus einem Spritzgussmaterial, z. B. Kunststoff, gefertigt. Der Führungskanal 4 dient unter anderem der Steifigkeit des Grundkörpers 2. Daher wird der Führungskanal 4 auch als Kunststoffkern bezeichnet, da dieser bei dem aus einem Leichtmetall gefertigten Grundkörper 2 dessen Torsions-, Biege- und Formsteifigkeit unterstützt. Der besonders dünnwandig ausgebildete Grundkörper 2 führt bei Durchströmen mit Luft zu einer Geräuschentwicklung, welche besonders vorteilhaft durch Auskleidung des Grundkörpers 2 mit dem aus Kunststoff gebildeten Führungskanal 4 gedämpft wird. D.h. der Führungskanal 4 selbst übernimmt u.a. eine Schallisolierung und ggf. auch eine thermische Isolierung. Zusätzlich kann der Führungskanal 4 auch mit einer nicht näher dargestellten Isolierungsschicht versehen sein.

Über den Führungskanal 4 kann der Grundkörper 2, insbesondere dessen zwei Halbkörper 2a und 2b zusammengehalten werden. Dazu wird der Führungskanal 4 an den Grundkörper 2 gefügt. Hierzu wird Kunststoff in den Grundkörper 2 beispielsweise in einem Spritzgussverfahren eingebracht. Alternativ und abhängig von der Art des Kunststoffs kann dieser auch eingeschäumt, eingegossen oder in ähnlicher Weise eingebracht sein. Alternativ kann der Führungskanal 4 auch vorgefertigt sein und als eine Baueinheit in den Grundkörper 2 gefügt werden.

Zusätzlich kann der Grundkörper 2 mechanisch verbunden sein. Beispielsweise kann der Grundkörper 2 an den aneinander liegenden Rändern R der Halbkörper 2a, 2b genietet, geschraubt, geschweißt, geclincht oder in ähnlicher Weise verbunden sein.

Für eine Verwendung des Bauteils 1 beispielsweise als Instrumententafelträger oder Querträger mit integriertem Luftführungskanal ist an dem Bauteil 1 mindestens eine Anbindung 6 vorgesehen, welche der Aufnahme eines Anbauteils 8 dient. Für eine flexible Gestaltung des Bauteils 1 ist die Anbindung 6 derart ausgeführt, dass das Anbauteil 8 nachträglich in einem Arbeitsgang oder Verfahrensschritt anfügbar ist. Dabei ist die Anbindung 6 für eine hinreichend feste Verbindung von Anbauteil 8 und Bauteil 1 form- und kraftschlüssig, insbesondere verdrehsicher ausgebildet.

Hierzu ist die Anbindung 6 als eine Kunststoff-Metall-Verbindung ausgeführt. Dabei weist die Oberfläche des Grundkörpers 2 im Bereich der Anbindung 6 einen eingefügten Kragen 10, z. B. einen Stanzkragen, auf. Der Stanzkragen oder Stanzrand kann dabei eine Verjüngung oder einen Hinterschnitt aufweisen, durch welchen beim Anfügen des Anbauteils 8, z. B. durch Pressen, an die Anbindung 6 eine besonders form- und kraftschlüssige Verbindung hergestellt wird.

Das Anbauteil 8 ist im Bereich der Anbindung 6 aus einer bereits geformten Spritzgussschicht KU, z. B. Kunststoff, gebildet. Dabei wird das Anbauteil 8 mittels der bereits geformten Spritzgussschicht KU an den Kragen 10 durch Kragenfügen angefügt. Im Detail wird für ein nachträgliches, insbesondere mechanisches Fügen des Anbauteils 8 an das Bauteil 1 der Kragen 10, der beispielsweise mittels eines Stempels in den metallischen Grundkörper 2 gedrückt wird, in die bereits geformte Spritzgussschicht KU der Anbindung 6 beispielsweise mittels eines Presswerkzeugs gedrückt. Ein derartig mechanisches Fügen des vorgefertigten Grundkörpers 2 mit dem vorgefertigten Anbauteil 8 ermöglicht eine besonders einfache und hinreichend stabile sowie kostengünstig herstellbare Verbindung, indem auf aufwendige Hybridwerkzeuge verzichtet werden kann und ein einfaches Presswerkzeug genügt.

Darüber hinaus ist das Anbauteil 8 selbst aus Kunststoff gebildet, welches im Spritzgussverfahren in einem separaten Werkzeug vorgefertigt und vorgeformt wird. Hierdurch kann das Anbauteil 8 in Form, Größe und Gestalt weitgehend variabel gefertigt werden, wobei als Herstellungsverfahren insbesondere einfache und kostengünstige Verfahren, wie z. B. Spritzguss, Strangpressen, Rotationsformen und Blasformen, Anwendung finden. Durch das mechanische Anfügen des Anbauteils 8 über eine separate Anbindung 6 im Bereich der Außenoberfläche des Bauteils 1 ist eine Beschädigung des im Grundkörper 2 integrierten und innen liegenden Führungskanals 4 weitgehend vermieden. Alternativ kann das Anbauteil 8 auch beim Anfügen an das Bauteil 1, z. B. im Spritzgussverfahren, geformt werden.

Figur 2 zeigt eine alternative Ausführungsform für ein Bauteil 1 im Querschnitt. Dabei weist das Bauteil 1 eine geänderte Außenform auf und ist mit mehreren Anbindungen 6 zum Anfügen von verschiedenartigen Anbauteilen 8 versehen. Auch sind am Grundkörper 2 weitere Kragen 10 zum zukünftigen Anfügen von weiteren Anbauteilen vorgesehen. Je nach Funktion des Bauteils 1 kann dieses mit einem Führungskanal 4 versehen sein. Alternativ kann der Grundkörper 2 durch seine Ausführung als Hohlkörper selbst einen Führungskanal bilden, z. B. einen Kabelkanal.

Die Figuren 3A und 3B zeigen eine Anbindung 6 im Detail für ein Anbauteil 8 im Querschnitt und einen Grundkörper 2 in Draufsicht mit mehreren Kragen 10. Je nach Art und Ausführung des Grundkörpers 2 und der Form und Größe des an diesen über die Anbindung 6 anzufügenden Anbauteils 8 kann der Grundkörper 2 mit mehreren Kragen 10 versehen sein.

Die Figuren 4A, 4B zeigen schematisch mehrere Anbindungen 6 für ein Anbauteil 8 in Draufsicht. Dabei zeigt die Figur 4A einen Ausschnitt eines Grundkörpers 2 im Bereich der Anbindungen 6 mit mehreren Kragen 10, welche für eine besonders form- und kraftschlüssige Verbindung weitgehend symmetrisch angeordnet sind. Die Kragen 10 werden wie oben beschrieben in die Oberfläche des metallischen Grundkörpers 2 gestanzt oder gepresst. Figur 4B zeigt ein Anbauteil 8, welches über die bereits geformte Spritzgussschicht KU mittels Kragenfügen an die Kragen 10 besonders form- und kraftschlüssig gefügt wird.

Figur 5 zeigt einen Teil eines Grundkörpers 2 im Bereich seines Randes R mit einem Kragen 10, z. B. für eine Anbindung 6 für ein Anbauteil 8 oder für eine zusätzliche Befestigung des Grundkörpers 2 an ein anderes Bauteil oder zum Verbinden zweier Segmente des Grundkörpers 2 beispielsweise durch Schrauben, Clinchen.

Die Figuren 6 und 7 zeigen im Querschnitt verschiedene Ausführungsformen für eine Anbindung 6 mit einem daran angefügten Anbauteil 8. In Figur 6 weist dabei das Anbauteil 8 mittels der bereits geformten Spritzgussschicht KU zwei zusätzliche Verbindungselemente 12, z. B. geformte Schnapp- oder Klemmhaken, auf. Figur 7 zeigt ein zusätzliches Verbindungselement 12. Diese Verbindungselemente 12 können beim Anfügen des Anbauteils 8 an das Bauteil 1, insbesondere an dessen Grundkörper 2 einklemmen, einclipsen und/oder einrasten und somit eine weitere Verbindung zwischen dem Bauteil 1 und dem Anbauteil 8 herstellen.

Die Figuren 8 und 9 zeigen in perspektivischer Darstellung einen Grundkörper 2 mit Anbindung 6 bzw. ein daran anzufügendes Anbauteil 8. Zusätzlich zur Anbindung 6 mit einem Kragen 10 zum Kragenfügen des Anbauteils 8 ist der Grundkörper 2 mit einer Ausnehmung 14 versehen, die einer zusätzlichen Fixierung des Anbauteils 8 über dessen Verbindungselemente 12 dient. Das Anbauteil 8 kann dabei als ein beliebiges Spritzguss-Bauteil, insbesondere Kunststoff-Bauteil ausgebildet sein, welches in einem separaten Werkzeug vorgeformt und vorgefertigt worden ist. Beispielsweise kann das Anbauteil 8 eine Instrumententafel-Aufnahme oder -Halterung, ein Schraubdome, ein Filmscharnier, ein Kabelhalter, eine Kabelführung, ein Montageträger für eine Lenkung, einen Airbag und/oder ein beliebiges Halteelement sein.

Die Figuren 10 und 11 zeigen eine weitere Ausführungsform für ein an eine Anbindung 6 des Grundkörpers 2 anzufügendes Anbauteil 8 im Querschnitt und in perspektivischer Darstellung. Dabei weist das Anbauteil 8 als zusätzliches Verbindungselement 12 eine Klemmrolle auf, die den Grundkörper 2 zumindest teilweise umgreift.

In der Figur 12 sind verschiedene Ausführungsformen für eine Anbindung 6 in perspektivischer Darstellung gezeigt. Alternativ zum Kragen 10 kann die Anbindung 6 auch als eine Öffnung 16, insbesondere eine Stanzung ausgebildet sein. Die Öffnung 16 dient insbesondere der Aufnahme eines der oben beschriebenen zusätzlichen Verbindungselemente 12 des Anbauteils 8, so dass eine hinreichend feste Verbindung, insbesondere kraftschlüssige Verbindung ermöglicht ist. Mit anderen Worten: Das Anbauteil 8 wird zumindest teilweise über die Öffnung 16 in den Grundkörper 2 eingeschoben und dort mechanisch gefügt.

Die Figur 13 zeigt im Querschnitt eine mögliche Ausführungsform für einen Grundkörper 2 mit Anbindung 6 und einer weiteren Verbindungsstelle 18 des Grundkörpers 2 für ein Anbauteil 8. Dabei kann die Verbindungsstelle 18 als eine Klemmverbindung, eine Rastverbindung, eine Clips-Verbindung, eine Schraubverbindung, eine Klebverbindung und/oder eine Bördelverbindung ausgebildet sein. In der Figur 13 ist die Verbindungsstelle 18 als eine formschlüssige Verbindung durch Einsetzen oder Einführen des Anbauteils 8 in den Grundkörper 2 an dessen Anbindung 6 vor oder nach dem mechanischen Kragenfügen des Anbauteils 8 an den Kragen 10 des Grundkörpers 2 ausgeführt. Die Figur 14 zeigt in perspektivischer Darstellung eine mögliche Ausführungsform für ein in die Anbindung 6 des Grundkörpers 2 nach Figur 13 einfügbares Anbauteil 8. Dabei ist das Anbauteil 8 im Bereich der Anbindung 6 mit einem stufenförmig geformten Verbindungselement 12 aus der bereits vorgeformten Spritzgussschicht KU versehen.

Die Figur 15 zeigt in perspektivischer Darstellung weitere verschiedene Ausführungsformen für eine Anbindung 6 eines Grundkörpers 2. Beispielsweise kann die Anbindung 6 alternativ oder zusätzlich zur Kragenform als eine Außenwölbung 20 ausgebildet sein. Die Außenwölbung 20 kann beispielsweise ein nach außen ragender Wulst oder eine nach außen ragende Sicke in der Oberfläche des Grundkörpers 2 sein. Analog zum Kragenfügen wird das Anbauteil 8, insbesondere dessen Spritzgussschicht KU im Bereich der Anbindung 6 auf die Außenwölbung 20 angefügt, z. B. gepresst.

Die Figur 16 zeigt eine Kombination von verschiedenen Verbindungen für ein Anbauteil 8 an das Bauteil 1. Dabei ist das Anbauteil 8 zum einen über zusätzliche Verbindungselemente 12 an den Grundkörper 2 angefügt, insbesondere geklemmt oder eingerastet. Zum anderen ist das Anbauteil 8 über die Anbindung 6 und den Kragen 10 an den Grundkörper 2 gefügt.

Figur 17 zeigt in perspektivischer Darstellung ein Bauteil 1 mit einem mehrere Anbindungen 6 für mehrere Anbauteile 8 aufweisenden Grundkörper 2. Dabei weist das Bauteil 1 einen geraden Verlauf auf. Alternativ kann das Bauteil 1 aber auch je nach Anwendung und Funktion einen anderen, insbesondere schlangenförmigen Verlauf mit Kröpfungen, z. B. um den Verlauf um andere benachbarte Bauteile zu ermöglichen, aufweisen. Zudem kann der Führungskanal 4 je nach Anwendung thermisch und/oder akustisch isoliert ausgebildet sein. Auch kann der Führungskanal 4 nachträglich in einen bereits gefügten Grundkörper 2 eingefügt werden. In diesem Fall ist der Führungskanal 4 beispielsweise als ein Schlauch ausgebildet, der in den rohrartigen Grundkörper 2 eingeführt wird und beispielsweise durch einen heißen Luftstrom an die Innenseite des Grundkörpers 2 thermisch selbst haftend gefügt wird.

Das Bauteil 1 kann dabei unterschiedlich gefertigt werden. So kann das Anbauteil 8 beispielsweise an einen vorgefertigten Grundkörper 2 integriert, insbesondere mechanisch gefügt, z. B. durch Kragenfügen, oder in Outsert-Technik angebracht werden. Beim Outsert-Verfahren wird die Verbindung mit Hilfe eine Spritzgussautomaten hergestellt, indem beispielsweise die Spritzgussschicht KU und gegebenenfalls die zusätzlichen, aus Spritzgussmaterial zu bildenden Verbindungselemente 12 des Anbauteils 8 auf den bereits vorgefertigten Grundkörper 2 im Bereich der Anbindung 6 aufgebracht und dort in einem Arbeitsgang geformt und form- und kraftschlüssig gefügt werden. Alternativ kann der Grundkörper 2 und die Anbindung 6 sowie die Anfügung des Anbauteils 8 als ein Modul oder eine Baueinheit vorgefertigt werden. Anschließend wird ein separat vorgefertigter Führungskanal 4 in den Grundkörper 2 eingefügt. In einer weiteren alternativen Ausführungsform wird der Grundkörper 2 mit seiner Anbindung 6 und mit einem zumindest teilweise oder vollständig integrierten, beispielsweise als Kunststoffkern ausgebildeten Führungskanal 4 vorgefertigt. Anschließend kann zu einem beliebigen Zeitpunkt an die vorhandene Anbindung 6 das Anbauteil 8 integriert, insbesondere gefügt, gepresst, geformt oder gespritzt werden.

Die Figuren 18 und 19 zeigen im Querschnitt ein Bauteil 1 bzw. einen Grundkörper 2 mit mehreren Anbindungen 6 für ein Anbauteil 8. Dabei kann es im Bereich der Anbindungen 6 zu einer Verbindung der Spritzgussschicht KU des Anbauteils 8 kommen. Die Figuren 20A und 20B zeigen schematisch eine Anbindung 6, beispielsweise für die Outsert-Technik im Detail für ein Anbauteil 8 mit verschiedenartig ausgebildeten Kragen 10 des Grundkörpers 2, welche eine unterschiedliche Festigung für die Verbindung des Grundkörpers 2 mit dem Anbauteil 8 bewirken.

## Patentansprüche

1. Bauteil (1), insbesondere Querträger zum Anordnen zwischen A-Säulen eines Kraftfahrzeugs, mit einem im wesentlichen als Hohlprofil ausgebildeten Grundkörper (2), der innen mit einem Führungskanal (4) versehen ist und mindestens eine Anbindung (6) aufweist, an welche ein Anbauteil (8) nachträglich in einem Verfahrensschritt integrierbar ist, **dadurch gekennzeichnet, dass** die Anbindung (6) eine weitere Verbindungsstelle (18) umfasst, die als eine Klemmverbindung, eine Rastverbindung, eine Clips-Verbindung, eine Schraubverbindung, eine Klebverbindung und/oder eine Bördelverbindung ausgebildet und aus einem Spritzgußmaterial, insbesondere Kunststoff gebildet ist.

2. Bauteil nach Anspruch 1, bei dem die Anbindung (6) form- und kraftschlüssig, insbesondere verdrehsicher ausgebildet ist.

3. Bauteil nach Anspruch 1 oder 2, bei dem die Anbindung (6) als eine Kunststoff-Metall-Verbindung ausgebildet ist.

4. Bauteil nach einem der vorhergehenden Ansprüche, bei dem die Anbindung (6) durch mindestens einen in der Oberfläche des Grundkörpers (2) eingefügten Kragen (10) gebildet ist.

5. Bauteil nach Anspruch 4, bei dem der Kragen (10) einen Hinterschnitt aufweist.

6. Bauteil nach Anspruch 4 oder 5, bei dem mehrere Kragen (10) vorgesehen sind.

7. Bauteil nach einem der vorhergehenden Ansprüche, bei dem die Anbindung (6) durch eine Außenwölbung (20), insbesondere einen nach außen ragenden Wulst oder eine nach außen ragende Sicke in der Oberfläche des Grundkörpers gebildet ist.

8. Bauteil nach einem der vorhergehenden Ansprüche, bei dem das Anbauteil (8) aus einem Spritzgußmaterial, insbesondere Kunststoff gebildet ist.

9. Bauteil nach einem der vorhergehenden Ansprüche, bei dem der Grundkörper (2) aus Metall, insbesondere Stahl, Titan, Aluminium, Magnesium gebildet ist.

10. Bauteil nach einem der vorhergehenden Ansprüche, bei dem der Führungskanal (4) aus einem Spritzgußmaterial, insbesondere Kunststoff gebildet ist.

11. Bauteil nach einem der vorhergehenden Ansprüche, bei dem der Führungskanal (4) akustisch und/oder thermisch isolierend ausgebildet ist.

12. Bauteil nach einem der vorhergehenden Ansprüche, bei dem das Anbauteil (8) im Bereich der Anbindung (6) aus einer Spritzgussschicht (KU), insbesondere Kunststoff gebildet ist.

13. Bauteil nach einem der vorhergehenden Ansprüche, bei dem das Anbauteil (8) an einen vorgefertigten Grundkörper (2), insbesondere in Outsert-Technik anbringbar ist.

14. Bauteil nach einem der vorhergehenden Ansprüche, bei dem der Grundkörper (2) mit seiner Anbindung (6) und dem Anbauteil (8) vorfertigbar ist und ein vorgefertigter Führungskanal (4) nachträglich in den Grundkörper (2) fügbar ist.

15. Bauteil nach einem der vorhergehenden Ansprüche, bei dem der Grundkörper (2) mit seiner Anbindung (6) und mit einem integrierten als Kunststoffkern ausgebildeten Führungskanal (4) vorfertigbar ist und das Anbauteil (8) nachträglich an der Anbindung (6) anbringbar ist.

16. Bauteil nach einem der vorhergehenden Ansprüche, bei dem der Führungskanal (4) im Grundkörper (2) zumindest teilweise integriert, insbesondere gefügt ist.

17. Bauteil nach einem der vorhergehenden Ansprüche, bei dem der Grundkörper (2) aus zwei oder mehreren Segmenten (2a, 2b), insbesondere Schalensegmenten gebildet ist.

18. Bauteil nach einem der vorhergehenden Ansprüche, bei dem das Anbauteil (8) eine Instrumententafel-Aufnahme, ein Schraubdom, ein Filmscharnier, ein Kabelhalter, eine Kabelführung, ein Montageträger für Lenkung, Airbag und/oder ein Halteelement ist.

19. Verwendung eines Bauteils nach einem der Ansprüche 1 bis 18 als Instrumententafelträger in einem Kraftfahrzeug, wobei der Führungskanal (4) ein Luftführungskanal und/oder ein Kabelkanal ist.

20. Verwendung eines Bauteils nach einem der Ansprüche 1 bis 18 als ein unter einer Windschutzscheibe angeordneter Querträger in einem Kraftfahrzeug, wobei der Führungskanal (4) ein Luftführungskanal zur Führung eines der Windschutzscheibe und/oder den Seitenscheiben zu zuführenden Luftstroms und/oder zur Beheizung einer Wischblattablage.

21. Verfahren zur Herstellung eines Bauteils nach einem der Ansprüche 1 bis 18, wobei der Grundkörper (2) in eine Grundform umgeformt wird und in den Grundkörper (2) ein Führungskanal (4) sowie in die Oberfläche des Grundkörpers (2) mindestens eine Anbindung (6) gefügt wird, an welche nachträglich in einem einzigen Verfahrensschritt oder Arbeitsgang ein Anbauteil (8) integriert, insbesondere mechanisch gefügt oder angeformt wird, **dadurch gekennzeichnet, dass** das Anbauteil (8) an einer weiteren Verbindungsstelle (18) befestigt wird, indem es an dieser weiteren Verbindungsstelle (18) stoff- und/oder formschlüssig mit dem Grundkörper (2) verbunden und an der weiteren Verbindungsstelle (18) wenigstens teilweise in den Grundkörper (2) eingeschoben wird.

22. Verfahren nach Anspruch 21, wobei das Anbauteil (8) an dem Grundkörper (2) befestigt wird, indem mindestens eine Spritzgussschicht (KU), insbesondere Kunststoff an den Grundkörper (2) im Bereich der Anbindung (6) selbst haftend angespritzt wird.

23. Verfahren nach Anspruch 21 oder 22, wobei ein vorgefertigtes Anbauteil (8) an dem Grundkörper (2) befestigt wird, indem es auf die Anbindung (6) des Grundkörpers (2) aufgepresst wird.

24. Verfahren nach einem der Ansprüche 21 bis 23, wobei die Anbindung (6) als ein Stanzrand geformt wird, an welchen eine Verjüngung und/oder ein Hinterschnitt ausgebildet sind.

25. Verfahren nach einem der Ansprüche 21 bis 24, wobei das Anbauteil (8) befestigt wird, indem es auf mindestens zwei an dem Grundkörper (2) geformte Anbindungen (6) aufgepresst wird.

26. Verfahren nach einem der Ansprüche 21 bis 25, wobei als Führungskanal (4) ein akustisch und/oder thermisch isolierender Kunststoffkanal eingebracht wird.

27. Verfahren nach einem der Ansprüche 21 bis 26, wobei der Führungskanal (4) an wenigstens einer Öffnung mit einer Dichtungsvorrichtung versehen wird.

28. Verfahren nach einem der Ansprüche 21 bis 27, wobei der Grundkörper (2) aus wenigstens zwei Schalen und/oder Segmenten zusammengesetzt wird.

29. Verfahren nach einem der vorhergehenden Ansprüche 21 bis 28, wobei als Anbauteil (8) ein Behälter, ein Kabelhalter und/oder ein anderes Befestigungselement an dem Querträger befestigt werden bzw. wird.

30. Verfahren nach einem der vorhergehenden Ansprüche 21 bis 29, wobei der Grundkörper (2) als ein geschlossenes Metallprofil verwendet wird.

## Claims

1. Structural element (1), in particular cross beam for positioning between A-pillars of a motor vehicle, having a basic body (2) designed essentially as a hollow section which is provided on the inside with a guide channel (4) and has at least one connector (6) to which it is possible to retrofit an add-on part (8) in one process step,
**characterised in that**
the connector (6) comprises a further connecting point (18) which is designed as a clamp connection, a snap-on connection, a clip
connection, a screw connection, an adhesive connection and/or a flanged connection and is made from an injection moulding material, in particular plastic.

2. Structural element in accordance with claim 1,
in which the connector (6) is designed to provide a positive and a non-positive connection, and in particular to be non-rotating.

3. Structural element in accordance with claim 1 or 2,
in which the connector (6) is designed as a plastic/metal connection.

4. Structural element in accordance with one of the preceding claims,
in which the connector (6) takes the form of at least one collar (10) inserted in the surface of the basic body (2).

5. Structural element in accordance with claim 4,
in which the collar (10) has an undercut section.

6. Structural element in accordance with claim 4 or 5,
in which a plurality of collars (10) is provided.

7. Structural element in accordance with one of the preceding claims,
in which the connector (6) takes the form of an outward protrusion (20), in particular an outward projecting bead or an outward projecting flange in the surface of the basic body.

8. Structural element in accordance with one of the preceding claims,
in which the add-on part (8) is made of an injection moulding material, in particular plastic.

9. Structural element in accordance with one of the preceding claims,
in which the base body (2) is made of metal, in particular steel, titanium, aluminium, magnesium.

10. Structural element in accordance with one of the preceding claims,
in which the guide channel (4) is made of an injection moulding material, in particular plastic.

11. Structural element in accordance with one of the preceding claims,
in which the guide channel is designed to provide acoustic or thermal insulation.

12. Structural element in accordance with one of the preceding claims,
in which the add-on part (8) is made of an injecting moulded layer (KU), in particular plastic, in the area of the connector (6).

13. Structural element in accordance with one of the preceding claims,
in which the add-on part (8) can be fitted to a pre-fabricated basic body (2), in particular using an outsert technique.

14. Structural element in accordance with one of the preceding claims,
in which the basic body (2) can be pre-fabricated with its connector (6) and the add-on part (8), and a pre-fabricated guide channel (4) can be retro-fitted into the basic body (2).

15. Structural element in accordance with one of the preceding claims,
in which the basic body (2) can be pre-fabricated with its connector (6) and with an integrated guide channel (4) designed as a plastic core, and the add-on part (8) can be retro-fitted to the connector (6).

16. Structural element in accordance with one of the preceding claims,
in which the guide channel (4) is at least partially integrated in and in particular joined to the basic body (2).

17. Structural element in accordance with one of the preceding claims,
in which the basic body (2) is formed of two or more segments (2a, 2b), in particular dish-shaped segments.

18. Structural element in accordance with one of the preceding claims,
in which the add-on part (8) is an instrument panel receiver, a screw boss, a film hinge, a cable clip, a cable guide, a mounting support for steering, airbag and/or a retaining element.

19. Use of a structural element in accordance with one of claims 1 to 18 as an instrument panel support in a motor vehicle, in which the guide channel (4) is an air duct and/or a cable duct.

20. Use of a structural element in accordance with one of claims 1 to 18 as a cross beam positioned beneath a windscreen in a motor vehicle, the guide channel (4) being an air duct for directing a stream of air towards
the windscreen and/or the side windows and/or for heating a wiper blade rest.

21. Process for the manufacture of a structural element in accordance with one of claims 1 to 18,
in which the basic body (2) is formed into a basic shape, a guide channel (4) is added to the basic body (2) and at least one connector (6) is added to the surface of the basic body (2), it being possible to retrofit, in particular to mechanically add or attach, an add-on part (8) to said connector (6) in one single process step or operating cycle,
**characterised in that**
the add-on part (8) is fixed to a further connecting point (18) by connecting it positively and/or non-positively to the basic body (2) at this further connecting point (18) and at least partially inserting it into the basic body (2) at the further connecting point (18).

22. Process in accordance with claim 21,
in which the add-on part (8) is fixed to the basic body (2) by spraying at least one injection moulded layer (KU), in particular plastic, self-adhesively onto the basic body (2) in the area of the connector (6).

23. Process in accordance with claim 21 or 22,
in which a pre-fabricated add-on part (8) is fixed to the basic body (2) by pressing it onto the connector (6) on the basic body (2).

24. Process in accordance with one of claims 21 to 23,
in which the connector (6) is formed as a stamped edge on which is formed a tapered and/or undercut section.

25. Process in accordance with one of claims 21 to 24,
in which the add-on part (8) is fixed by pressing it onto at least two connectors (6) formed on the basic body (2).

26. Process in accordance with one of claims 21 to 25,
in which an acoustically or thermally insulating plastic duct is fitted as the guide channel (4).

27. Process in accordance with one of claims 21 to 26,
in which the guide channel (4) is provided with a sealing device at at least one opening.

28. Process in accordance with one of claims 21 to 27,
in which the basic body (2) is composed of at least two shells and/or segments.

29. Process in accordance with one of the preceding claims 21 to 28,
in which a container, a cable clip and/or another fixing element is/are fixed to the cross beam as the add-on part (8).

30. Process in accordance with one of the preceding claims 21 to 29,
in which the basic body (2) is used as a closed metal section.

## Revendications

1. Pièce de structure (1), en particulier traverse servant à l'agencement entre deux montants (A) d'un véhicule automobile, comprenant un corps de base (2) configuré essentiellement comme un profilé creux, corps de base qui est doté, intérieurement, d'un conduit de guidage (4) et présente au moins une attache (6) à laquelle une pièce de structure ajoutée (8) peut être intégrée ultérieurement au cours d'une étape du procédé,
**caractérisée en ce que** l'attache (6) comporte un autre point d'assemblage (18) qui est configuré comme un assemblage par serrage, un assemblage par encliquetage, un assemblage clipsé, un assemblage vissé, un assemblage collé et / ou un assemblage par sertissage et est formé par une matière moulée par injection, en particulier une matière plastique.

2. Pièce de structure selon la revendication 1, dans laquelle l'attache (6) est configurée comme étant à liaison par complémentarité de forme et engagée à force, en particulier en étant antitorsion.

3. Pièce de structure selon la revendication 1 ou 2, dans laquelle l'attache (6) est configurée comme un assemblage matière plastique / métal.

4. Pièce de structure selon l'une quelconque des revendications précédentes, dans laquelle l'attache (6) est formée par au moins une collerette (10) introduite dans la surface du corps de base (2).

5. Pièce de structure selon la revendication 4, dans laquelle la collerette (10) présente une contre-dépouille.

6. Pièce de structure selon la revendication 4 ou 5, dans laquelle il est prévu plusieurs collerettes (10).

7. Pièce de structure selon l'une quelconque des revendications précédentes, dans laquelle l'attache (6) est formée par une courbure extérieure (20), en particulier par un bourrelet dépassant vers l'extérieur ou bien par une moulure formée dans la surface du corps de base et dépassant vers l'extérieur.

8. Pièce de structure selon l'une quelconque des revendications précédentes, dans laquelle la pièce rapportée (8) est formée par une matière modulée par injection, en particulier par une matière plastique.

9. Pièce de structure selon l'une quelconque des revendications précédentes, dans laquelle le corps de base (2) est en métal, en particulier en acier, en titane, en aluminium, en magnésium.

10. Pièce de structure selon l'une quelconque des revendications précédentes, dans laquelle le conduit de guidage (4) est formé par une matière moulée par injection, en particulier par une matière plastique.

11. Pièce de structure selon l'une quelconque des revendications précédentes, dans laquelle le conduit de guidage (4) est configuré en étant acoustiquement et / ou thermiquement isolant.

12. Pièce de structure selon l'une quelconque des revendications précédentes, dans laquelle la pièce rapportée (8) est formée, dans la zone de l'attache (6), par une couche moulée par injection (KU), en particulier par une matière plastique.

13. Pièce de structure selon l'une quelconque des revendications précédente, dans laquelle la pièce rapportée (8) peut être fixée sur un corps de base préfabriqué (2), en particulier suivant la technique des pièces rapportées extérieurement.

14. Pièce de structure selon l'une quelconque des revendications précédentes, dans laquelle le corps de base (2) peut être préfabriqué avec son attache (6) et la pièce rapportée (8), et un conduit de guidage préfabriqué (4) peut être assemblé ultérieurement dans le corps de base (2).

15. Pièce de structure selon l'une quelconque des revendications précédentes, dans laquelle le corps de base (2) peut être fabriqué avec son attache (6) et avec un conduit de guidage intégré (4) configuré comme un noyau en matière plastique, et la pièce rapportée (8) peut être fixée ultérieurement sur l'attache (6).

16. Pièce de structure selon l'une quelconque des revendications précédentes, dans laquelle le conduit de guidage (4) est intégré, en particulier assemblé au moins partiellement dans le corps de base (2).

17. Pièce de structure selon l'une quelconque des revendications précédentes, dans laquelle le corps de base (2) est formé par deux ou plusieurs segments (2a, 2b), en particulier par des segments en forme de coque.

18. Pièce de structure selon l'une quelconque des revendications précédentes, dans laquelle la pièce rapportée (8) est un logement de tableau de bord, un bossage de vis, une charnière pelliculaire, une attache de câble, un passage de câble, un support de montage pour la direction, un coussin gonflable et / ou un élément de retenue.

19. Utilisation d'une pièce de structure selon l'une quelconque des revendications 1 à 18, comme support de tableau de bord dans un véhicule automobile, où le conduit de guidage (4) est un conduit de guidage d'air et / ou un conduit de câble.

20. Utilisation d'une pièce de structure selon l'une quelconque des revendications 1 à 18, comme traverse placée dans un véhicule automobile et disposée sous un pare-brise, où le conduit de guidage (4) est un conduit de guidage d'air servant au guidage d'un flux d'air à fournir au pare-brise et / ou aux vitres latérales et / ou servant au chauffage d'un espace de rangement des essuie-glaces.

21. Procédé de fabrication d'une pièce de structure selon l'une quelconque des revendications 1 à 18, où le corps de base (2) est transformé en une forme de base, et un conduit de guidage (4) est assemblé dans le corps de base (2), de même qu'au moins une attache (6) est assemblée dans la surface du corps de base (2), attache à laquelle une pièce rapportée (8) est intégrée, en particulier assemblée mécaniquement ou moulée, ultérieurement, au cours d'une seule étape du procédé ou d'une seule opération,
**caractérisé en ce que** la pièce rapportée (8) est fixée au niveau d'un autre point d'assemblage (18), tandis que ladite pièce rapportée est assemblée au corps de base (2), au niveau de cet autre point d'assemblage (18), par continuité de matière et / ou par complémentarité de forme, et, au niveau de l'autre point d'assemblage (18), au moins partiellement insérée dans le corps de base (2).

22. Procédé selon la revendication 21, où la pièce rapportée (8) est fixée sur le corps de base (2), tandis qu'au moins une couche moulée par injection (KU), en particulier de la matière plastique, est injectée, de façon autoadhésive, sur le corps de base (2), dans la zone de l'attache (6).

23. Procédé selon la revendication 21 ou 22, où une pièce rapportée préfabriquée (8) est fixée sur le corps de base (2), tandis que ladite pièce rapportée est engagée par pression sur l'attache (6) du corps de base (2).

24. Procédé selon l'une quelconque des revendications 21 à 23, où l'attache (6) est formée comme un bord découpé sur lequel sont configurés un rétrécissement et / ou une contre-dépouille.

25. Procédé selon l'une quelconque des revendications 21 à 24, où la pièce rapportée (8) est fixée, tandis qu'elle est engagée par pression sur au moins deux attaches (6) moulées sur le corps de base (2).

26. Procédé selon l'une quelconque des revendications 21 à 25, où est monté, comme conduit de guidage (4), un conduit en matière plastique acoustiquement et / ou thermiquement isolant.

27. Procédé selon l'une quelconque des revendications 21 à 26, où le conduit de guidage (4) est doté, sur au moins une ouverture, d'un dispositif d'étanchéité.

28. Procédé selon l'une quelconque des revendications 21 à 27, où le corps de base (2) est composé d'au moins deux coques et / ou segments.

29. Procédé selon l'une quelconque des revendications 21 à 28, où un récipient, une attache de câble et / ou un autre élément de fixation est ou sont fixé(s) sur la traverse, comme pièce rapportée (8).

30. Procédé selon l'une quelconque des revendications 21 à 29, où le corps de base (2) est utilisé comme un profilé métallique fermé.
